# EUROPEAN PATENT APPLICATION

(11) **EP 4 629 056 A1**
(43) Date of publication of application: **08.10.2025**
(21) Application number: 25165765.6
(22) Date of filing: 24.03.2025
(51) Int. Cl.: G06F 8/30, G06V 10/00, G06F 40/30, G06N 20/00, G06F 8/33

(54) **VIDEO ANALYTICS PIPELINE DEVELOPMENT SYSTEM WITH ASSISTIVE FEEDBACK AND ANNOTATION**

(30) Priority: 05.04.2024 US 202463574996 P; 28.06.2024 US 202418759687
(71) Applicant: INTEL Corporation, Santa Clara, CA 95054 (US)
(72) Inventor: SILVA, Andradige, Portland, 97229 (US); AHMAD RAFI, Aqilah binti, 43650 Bandar Baru Bangi, Selangor (MY); PHOR, Wei Xuan, 11500 Air Itam, Pulau Pinang (MY); TAYLOR, Stewart, Los Altos, 94024 (US); LIM, Yee Wen, 11200 Tanjung Bungah, Penang (MY)
(74) Representative: 2SPL Patentanwälte PartG mbB

(57) **Abstract**

Various systems and methods for AI-assisted coding and refinement of an executable video analytics pipeline using feedback and annotation, and related processing and AI functions, are discussed. An example method for establishing an executable video analytics pipeline includes: receiving a natural language description of a video analytics pipeline; invoking a language model to produce auto-generated code for the video analytics pipeline based on the natural language description, with the auto-generated code being configured to sequentially process an input video stream with respective software components; outputting a representation of the auto-generated code for the video analytics pipeline; and outputting a preview of results from execution of the auto-generated code for the video analytics pipeline, using the software components to process a video stream.

## Description

### PRIORITY CLAIM

This application claims the benefit of priority to United States Provisional Patent Application No. 63/574,996, filed on April 5, 2024, and titled "AI-ASSISTED CODING AND REFINEMENT OF AN EXECUTABLE VIDEO ANALYTICS PIPELINE USING FEEDBACK AND ANNOTATION", which is incorporated herein by reference in its entirety.

### BACKGROUND

A video analytics pipeline (VAP) generally refers to a workload implemented as a pipeline with multiple software nodes that perform video processing, encode, decode, transcode, and visual AI inference operations. VAPs have become very popular for deployment in edge compute solutions and data center solutions. VAPs can be used for a variety of use cases, including but not limited to healthcare, education, retail, smart cities, transportation, industrial, and federal industries. However, developing a VAP is a very complex task that requires a highly advanced skill set and knowledge in software development, video processing, artificial intelligence, and hardware architecture/features.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
FIG. 1 depicts a sequence diagram of an example workflow for the creation of a video analytics pipeline, according to an example;
FIG. 2 depicts a schematic of a user interface for a video analytics pipeline development system, according to an example;
FIG. 3 depicts an expanded view of a natural language conversation interface with a video analytics pipeline development system, according to an example;
FIG. 4 depicts a flow diagram of operations performed within a video analytics pipeline development system, according to an example;
FIG. 5 depicts an expanded view of an annotated graph and annotated code interface with a video analytics pipeline development system, according to an example;
FIG. 6 depicts a flowchart of an example method of generating code for a video analytics pipeline, according to an example;
FIG. 7 is a block diagram illustrating an example machine upon which any one or more of the techniques (e.g., methodologies) discussed herein may perform, according to an example.

### DETAILED DESCRIPTION

In the following description, for purposes of explanation, numerous specific details are set forth in order to provide a thorough understanding of some example embodiments. It will be evident, however, to one skilled in the art that the present disclosure may be practiced without these specific details.

The following description relates to an expert system for VAP development, including aspects of related software development, testing, and integration use cases. This expert system for VAP development bridges the knowledge and expertise gap of its users, by providing functionality and features that enable a user to easily develop, identify, and validate the results of a VAP implementation. This expert system enables a user to develop a specific VAP for a particular use case-that the user designs and refines via iteratively progressing interaction loops-while also providing the user with AI-assisted coding and refinement methods and feedback and annotation techniques.

The use of a VAP is becoming common in the edge for a variety of scenarios such as, for instance, taking camera data and classifying/identifying some objects or analysis, and automatically publishing or showing the result of the classification/identification in real-time. To build and configure this type of a VAP, a user often needs to understand the capabilities and functions of the streaming pipeline library, even though the user may not have programming or software development skills to optimize the flow.

The presently described VAP development system can create and optimize a flow for these and other scenarios based on user interaction with a chatbot. For example, as the user interacts with the chatbot, the user provides additional natural language description of what features or functions to use in the pipeline. The present VAP development system thus provides an end-to-end environment that generates code, presents an annotated version of the code, presents a graph view of the code (drawn based on the code and nodes invoked by the code), collects properties and specifications for use of the code and nodes invoked by the code, receives user input in text or graphical form to modify aspects of the code, and demonstrates outputs from an example video processing output of executing the code.

Some hardware vendors have provided software development kits (SDKs) to help enable VAP development with their hardware, by augmenting two of the most widely adapted video processing frameworks: GStreamer and FFMPEG. Nvidia^{®} DeepStream, Samsung^{®} NNStreamer, and Intel^{®} DL Streamer are examples of vendor SDKs that are based on GStreamer. However, these SDKs and frameworks have very steep learning curves. The use of these SDKs often requires extensive expertise in the respective software ecosystem, and a thorough and up-to-date understanding of the AI models and video processing technology to develop VAPs.

As a result, it has become very difficult and unusually time-consuming for a solution builder (such as an independent software vendor (ISV), system integrator (SI), or original equipment manufacturer (OEM)) to build and maintain VAPs. Hence, most solution builders have become dependent on hardware vendors to provide vendor software to build VAPs. Likewise, the lack of knowledge and expertise has become a major roadblock for VAP-based solution development by individual users. This problem has not yet been handled effectively in a scalable manner, which has prevented wider adoption of VAPs by beginner/intermediate VAP developers and organizations and the expanded use of VAPs for other use cases. Some aspects of these challenges have been considered by prior approaches to simplify and automate coding efforts. IntelliSense technology has been made available in all major IDEs for several years and can provide context-aware suggestions and recommendations during code development. However, IntelliSense is used to suggest one token at a time and is often limited based on the user's coding skills.

Newer large language models (LLMs) have shown a potential to generate larger software code blocks in response to natural language descriptions of code requirements. However, state-of-the-art code generation LLMs are highly nondeterministic - as they are empirically shown to generate very different codes for the same prompt. In fact, LLMs (like many other AI models) are inherently non-deterministic by design, as these models are designed to predict the probabilities of output tokens for a given context. Unreliable and inconsistent code blocks yield unreliable and inconsistent software. Therefore, most code generation LLMs (and similar stochastic AI models for code output) are currently not capable of generating accurate and reliable code for VAPs. GitHub Copilot and Generative AI chatbots such as ChatGPT and Bing Chat are two examples of commercial AI tools that have begun to offer features of automatic code generation. However, ChatGPT (e.g., in GPT-3.5 and GPT-4 versions) can be highly unstable in generating code, and so software developers are cautioned of the risks and vulnerabilities of using it as a software development tool. In fact, ChatGPT may fail to generate executable code during a large portion of the time, especially for lower-level statically typed languages. VAP development often relies on lower-level statically typed languages, and languages such as C/C++ are often prevalent in VAP implementations.

Studies have found that the use of GitHub Copilot and similar tools do not necessarily improve the speed of development or the success rate of code development. The use of automated code generation tools may even hinder a developer's task-solving effectiveness because many developers face difficulties in understanding, editing, and debugging pre-generated code. Thus, many types of current-generation LLM-based code generation tools are pre-disposed to generate code that will fail at compilation time or run time, or not be useful. This provides a large hurdle for AI-assisted coding, as improved techniques and agents are needed to efficiently interact with LLMs to address the above-mentioned issues.

To address these issues, the VAP development systems described herein enable a user to create code for a video analytics (AI) pipeline with a series of natural language prompts. This full-stack development system also provides a user interface (e.g., an integrated development environment (IDE)) that presents various areas (e.g., windows, screens, inputs) for conversing with and controlling the chatbot, code generator, corresponding graph and video outputs, and an LLM agent that produces (outputs, displays) code. This development system combines an LLM with one or more agents to produce working code, so that the user can always see the results (e.g., video output, code, and graph) at each stage of development, and annotated views of the VAP (e.g., annotated code and an annotated graph of processing actions) so that the user can easily understand and progressively refine the code and VAP output with further natural language prompts.

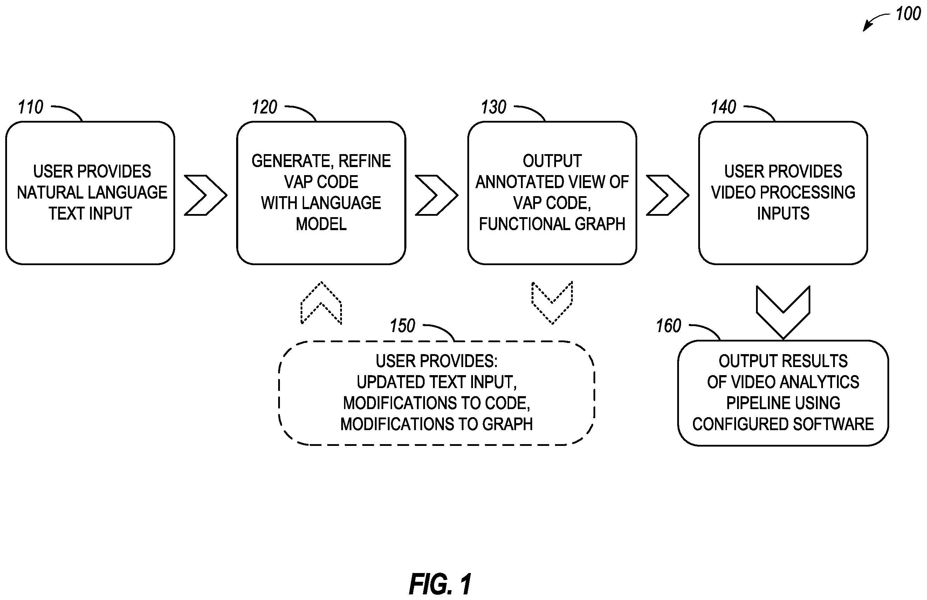

FIG. 1 depicts a sequence diagram, depicting an example workflow 100 for the creation of a VAP with the presently described development system. The workflow 100 demonstrates a combination of human-based and computer-based operations, but it will be understood that a variety of additional computer-based operations are not depicted to interpret and handle human-based commands.

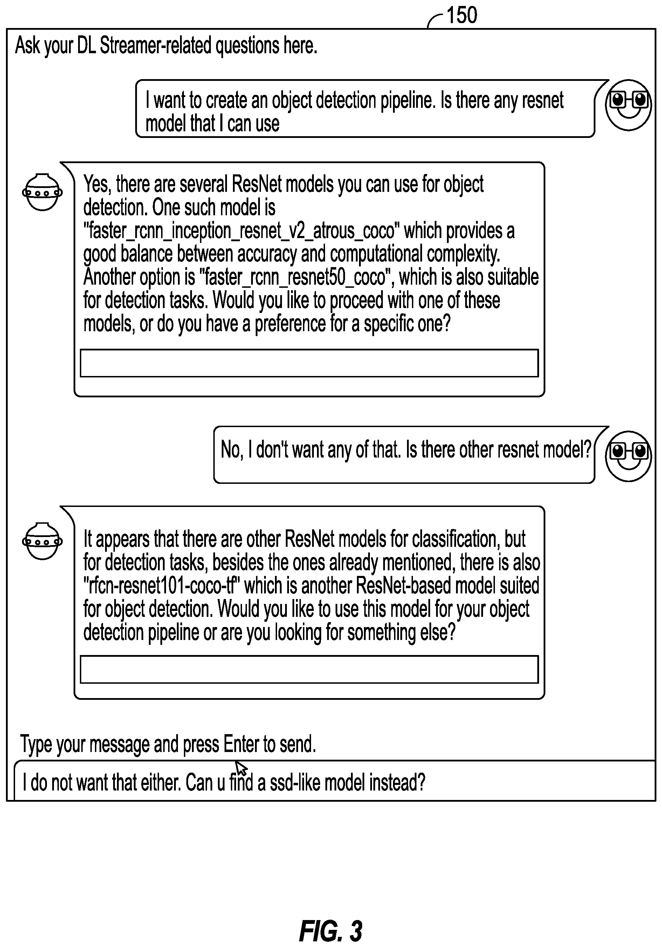

A user provides natural language text input at block 110. This natural language text input may include a description of the actions or the objectives of the VAP, a description about the kind of video or image processing model to be used in the VAP, a description about the particular use case, etc. The natural language text input may occur in a conversational or instructional user interface, where multiple queries and responses are posted and exchanged with a human user. An example of a conversation that provides natural language text between a human user and a chatbot is depicted in more detail in FIG. 3.

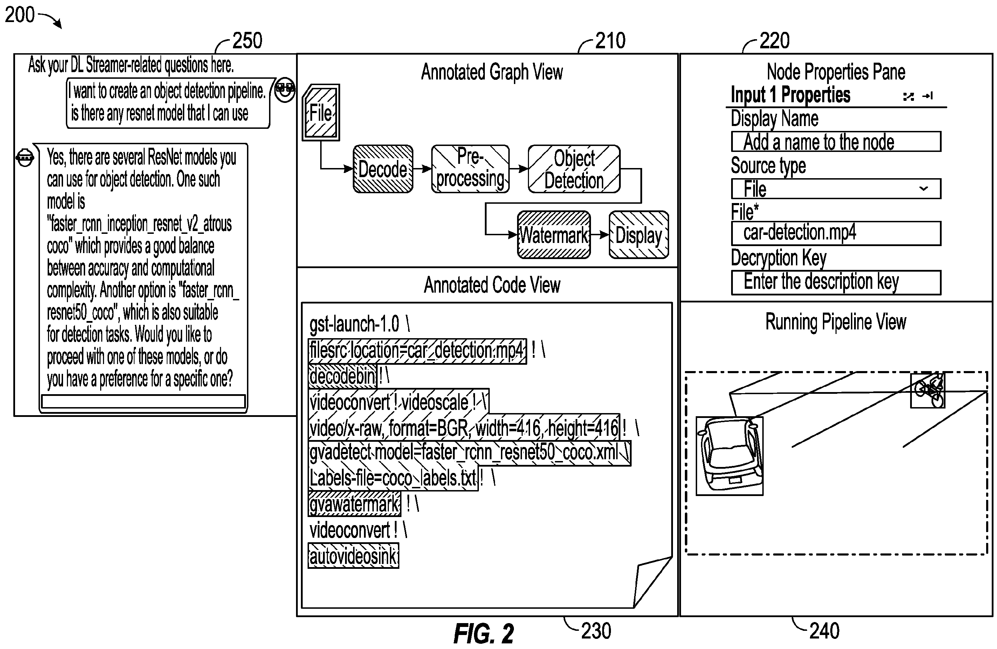

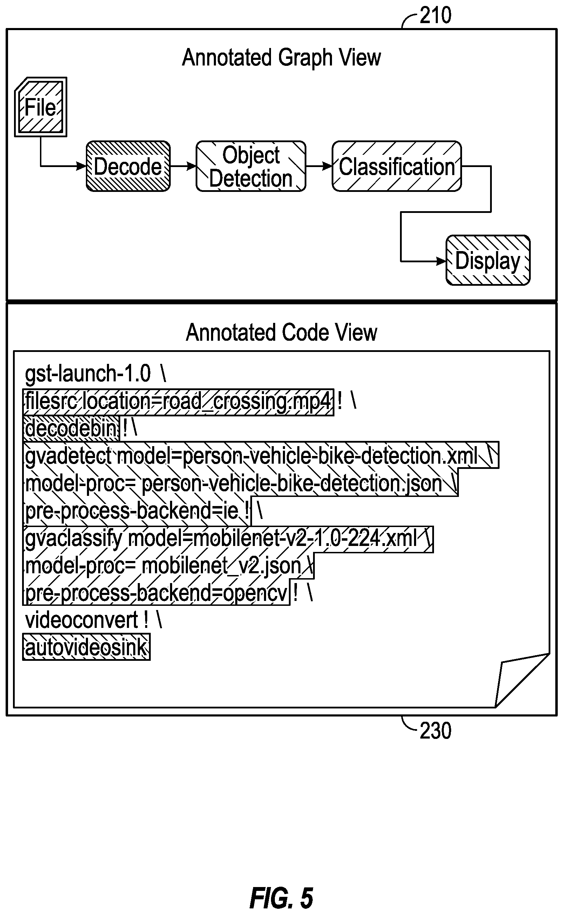

The VAP development system generates and refines VAP code at block 120, using a language model (e.g. a LLM discussed below), based on the natural language text input and chatbot conversation. This VAP code may include various forms of human and machine-readable scripting, source code, instructions, commands, and the like. An example of VAP code is depicted in FIG. 2 and FIG. 5, and in TABLE 1 and 2, discussed below.

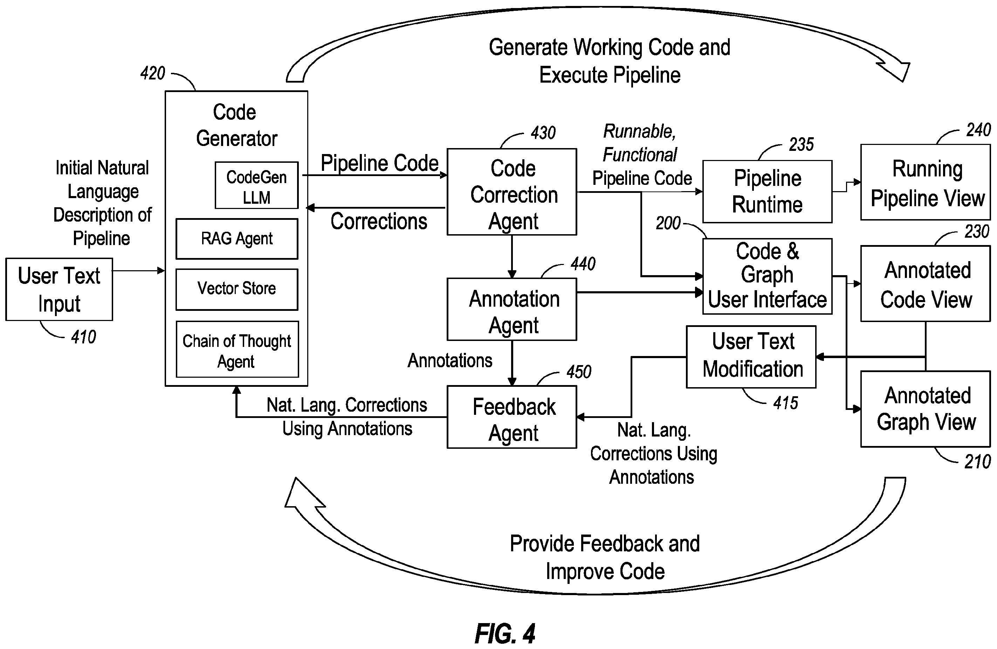

The VAP development system provides an output, at block 130, of an annotated view of the VAP code and an annotated view of a functional graph of operations performed by the VAP code. An example of annotations provided in a code view and a graph view is depicted in more detail in FIG. 2 and FIG. 4.

The user provides video processing inputs at block 140, for an example execution of the VAP. Such video processing inputs may include information about the video or camera data source, and information to access/use/process this video or camera data source. An example of video processing inputs for a particular node of the VAP that performs image data processing (with specific node properties) is depicted in more detail in FIG. 2.

The user provides additional modifying inputs at block 150. This may include updated text input, modifications to code, or modifications to the graph. These modifying inputs may occur via chatbot interactions as depicted in more detail in FIG. 3. The inputs may include other forms of feedback and interaction that are used to provide updated prompts, instructions, or training for the language model.

The VAP development system provides an output of results of the VAP at block 160, using configured software that provides an example execution of the VAP. This may include code compilation, execution, and use of the configured software (e.g., based on the video processing inputs provided at block 140). An example of output in a running pipeline is depicted in more detail in FIG. 2.

Thus, the presently described development system includes multiple functions useful for the development of a VAP, such as: a feedback loop with agent iterations to ensure functionally working code (a Code Correction Agent); an end-to-end flow for progressive refinement (across a complete system, with multiple views and annotations for code and functional components); functionality for solving video analytics problems; while at the same time, providing these functions in an intuitive and user-friendly manner in a user interface. This provides a powerful platform that is usable by both professionals and non-professionals (skilled and non-skilled users) alike.

The presently described VAP development system can be contrasted with existing VAP development systems and approaches. One of the most prevalent VAP development systems is Nvidia^{®} Graph Composer (GC), which does not provide auto code generation. GC is a user interface (UI) tool that enables a user to build a VAP by dragging and dropping pipeline nodes from an available catalog, allowing a user to configure node properties and connect nodes to build a pipeline. Current versions of GC, however, do not provide code auto-generation via AI models. In GC, each of the nodes in the catalog represents a pre-coded software module. Once the user visually builds a VAP by arranging and configuring nodes, GC translates that into code by only utilizing corresponding pre-coded modules of the nodes. The user has to then compile and execute the code manually.

Although GC offers an environment with pre-installed dependencies, there is no guarantee that the defined VAP will either compile or execute. Like any regular handwritten code, if there are any errors, GC will throw errors at compilation/validation and execution time for a user to manually debug and handle. While the GC system helps users to write code, GC still requires the user to have a deep understanding and expertise about the VAP that they want to build, along with general video processing and AI expertise and knowledge about individual nodes in the GC catalog and their numerous properties. Debugging compilation and run-time errors manually would require expertise of the individual video processing and AI SDKs (such as Nvidia^{®} DeepStream, Triton SDKs, and similar AI/video processing functions). Thus, visual programming tools like GC have not been sufficient to bridge the expertise gap. Substituting written code with visual blocks does not make development necessarily easier for developers, but merely substitutes one development modality with another-while keeping the expertise prerequisites more or less the same.

Additionally, despite the increasing prevalence of generative AI and code generation functions, current generative AI systems are not specifically designed to perform auto code generation for VAP development. VAP development is particularly complicated because current tools do not offer ways for VAP developers to effectively understand, edit, and debug the code that the tool generates. This is very important in instances where long blocks of code are auto-generated. Further, a software developer, especially in a VAP development setting, may be required to manually install dependencies of the generated code before compiling it, all while trying to design and connect multiple individual code blocks to build a holistic workload/application for a processing pipeline. Thus, existing code generation tools and development environments do not offer a robust and easy-to-use environment for VAP code development specifically. The presently described VAP development system addresses these and many other of the technical challenges with respect to VAP design, software development, and system integration.

FIG. 2 depicts a schematic of a User Interface 200 of the proposed VAP development system, including: an Annotated Graph View 210, a Node Properties Pane 220, an Annotated Code View 230, a Running Pipeline View 240, and a Chatbot Interface 250. The layout of the User Interface 200 is provided as an example only, as other layouts or arrangements of these views, windows, or panes may be provided.

In an example, the VAP development system includes the following components and functionality, for improved generation of code and customization. First, the Chatbot Interface 250 is used for receiving initial and updated information from a human user, in the form of a natural language text description about the VAP and project objectives. FIG. 3 depicts a close-up view of the Chatbot Interface 250, including a detailed list of prompts, responses, and instructions that are interpretable by a language model (e.g., a generative AI large language model (LLM)).

The Chatbot Interface 250 invokes a language model and a code generator (e.g., shown in more detail in FIG. 4) to generate code in the Annotated Code View 230, and to generate a visual representation of code operations in the Annotated Graph View 210. The VAP development system includes functionality for identifying all video processing elements, phases, or nodes uniquely, and cross-linking these elements between Annotated Graph View 210 and Annotated Code View 230 (e.g., using the same colors or identifiers for different sections of the code). The Node Properties Pane 220 allows a user to specify additional configuration details for the preview or use of individual nodes (e.g., decoding node, detection node, watermark node etc.) used to perform operations in the VAP. The Annotated Graph View 210, the Annotated Code View 230, and the Node Properties Pane 220 are intended to assist a non-programmer to provide controlling inputs, while sufficiently understanding the code and data flow to change individual elements.

The VAP development system includes functionality for automatically running the generated code using a VAP runtime, by offering a Running Pipeline View 240 for a user to visually validate the pipeline output. This provides an immediate, in-application way for the user to connect their input/specifications to the results of the code execution. Unlike existing approaches, the user is not required to build an executable runtime by installing dependencies or manually designing outputs from the executable runtime.

The VAP development system includes a Code Correction Agent to ensure that the code that the language model generates (and presented in the Annotated Code View 230) is working, including being executable and free from both compilation and runtime errors. The Code Correction Agent eliminates the need for manual debugging of generated code. A useful design principle of the VAP development system is ensuring the code generated at each stage is runnable so the user can execute code and initiate the feedback process meaningfully at each stage. Existing code generation solutions do not generate fully functional/working code automatically, and cannot apply this feedback process.

The VAP development system also includes a Feedback Agent to interpret user feedback, and enable a user to revise specific blocks/modules/instances of the generated code. The user can refer to elements by their annotations in either the Annotated Graph View 210 and the Annotated Code View 230, and the Feedback Agent will translate them for the Code Generator (to then produce updated code in the Annotated Code View 230).

FIG. 4 depicts a flow diagram of operations in the presently described VAP development system. The system operates and generates code for the VAP as follows. First, a user (e.g., a human user) provides an initial natural language description of the video analytics pipeline by providing Text Input 410 to a Code Generator System 420. In an example, the Code Generator System 420 includes an LLM that has been trained or instructed on the particular runtime and syntax to be targeted (e.g., a GStreamer/DLStreamer runtime and associated code syntax), to generate executable pipeline code that corresponds to the natural language text prompts. The Code Generator System 420 may include other functional components used for text processing and analysis, such as a Retrieval Augmented Generation (RAG) agent, a Vector Store, a chain of thought agent, etc. The RAG Agent and the Vector Store are used to ensure the code is generated based on the latest library versions, and confined within certain guard rails to enhance accuracy and limit hallucinations. This also removes the need for the user to search the Internet and refer to specific documentation for development.

The Code Generator System 420 may not necessarily generate executable functional code, because state-of-the-art LLM code generation operations fail to generate runnable code much of the time (e.g., about ~55% of the time, according to some measures). This is addressed in the VAP development system by the use of a Code Correction Agent 430. The Code Correction Agent 430 is capable of performing code correction by iterating until the generated pipeline runs successfully, and functional (runnable) pipeline code is produced for a Pipeline Runtime 235.

The Code Correction Agent 430 invokes an Annotation Agent 440 to add Annotations to elements of the pipeline so that the User can uniquely identify and provide feedback on the pipeline elements in the User Interface 200. The output of the Code Correction Agent 430 is executable code, which is provided to the Annotation Agent 440 to takes the code and produce Annotations. These Annotations are added to the various views shown to the user: the video output of the pipeline when executed (Running Pipeline View 240), the code with annotations for each pipeline element (Annotated Code View 230), and a graph/drawing representation of the pipeline (Annotated Graph View 210). A user can easily view the properties of any pipeline node in the Node Properties Pane 220.

Based primarily on the Running Pipeline View 240 output, and optionally the output from the Annotated Graph View 210 and the Annotated Code View 230, the user can instruct a Feedback Agent 450 / Code Generator System 420 (e.g., via subsequent User Text Input 410) about what changes that the user wants to make, or any problems that the user has observed with the running pipeline. Optionally, the user can refer to the elements in the chat session by referring to the name/number/color/indicator used to annotate (e.g., highlight) the code.

In the Annotation Agent 440, the system maintains a mapping (e.g., annotation map) between the code generated by the Code Generator System 420 and the various annotations (e.g., highlights) shown to the user or added/modified by the user via Running Pipeline View 240, Annotated Code View 230, and Annotated Graph View 210. Using this annotation mapping, the Feedback Agent 450 interprets any annotation references in the user prompts and translates the references to prompts that the Code Generator System 420 can understand and feed into the LLM code generator. Then the Code Generator System 420 generates the revised code accordingly and the user may start the next iteration.

The following example demonstrates the VAP development system in action. The user types a prompt such as, "I want to build an object classification pipeline". The system responds "OK. Before classifying objects, you need to detect objects using an object detector. Let's use the sample video file "road _crossing.mp4" and in that video you will find pedestrians, vehicles, and bicycles. Hence let's use "person-vehicle-bike-detection" model from the model zoo, which is trained to detect those objects in a traffic intersection setting, like the one found in the video. To classify the detected objects, let's use "Mobilenet-v2" model which is a good balance between accuracy and performance."

The system generates the following code originally:

**TABLE 1**

| |
|---|
| gst-launch-1.0 filesrc location=road_crossing.mp4 ! decodebin ! videoconvert ! gvadetect model=person-vehicle-bike-detection.xml model-proc=person-vehicle-bike-detection.json pre-process-backend=ie ! gvaclassify model=mobilenet-v2-1.0-224.xml model-proc=preproc- |
| aspect-ratio.json pre-process-backend=opencv ! videoconvert ! autovideosink |

The Code Correction Agent 430 analyzes the code with the use of the Pipeline Runtime 235 and determines that the *model-proc* file used in the *gvaclassify* element does not work with the chosen classification model. The Code Correction Agent 430 identifies this problem and works with the Code Generator System 420 to correct the problem. The Code Generator System 420 substitutes the previous *model-proc* file with the appropriate *model-proc* file and produces a revised code as follows:

**TABLE 2**

| |
|---|
| gst-launch-1.0 filesrc location=road_crossing.mp4 ! decodebin ! videoconvert ! gvadetect model=person-vehicle-bike-detection.xml model-proc=person-vehicle-bike-detection.json pre-process-backend=ie ! gvaclassify model=mobilenet-v2-1.0-224.xml model-proc=mobilenet_v2.json pre-process-backend=opencv ! videoconvert ! autovideosink |

FIG. 5 depicts another example of output with the Annotated Graph View 210 and the Annotated Code View 230. The Code Correction Agent 430 analyzes the revised code and finds that it is executable. Hence, the code is fed into the Pipeline Runtime 235 and into the Annotated Code View 230 and the Annotated Graph View 210 display components. The Pipeline Runtime 235 model runs the revised code and displays the video output in the Running Pipeline View 240. The display model(s) generate updated content for the Annotated Code View 230 and Annotated Graph View 210 (e.g., similar to the depiction in FIG. 4) corresponding to the revised code.

The user studies the Annotated Code View 230 and notices that two different values were used for 'pre-process-backend' for 'gvadetect' and 'gvaclassify' and types the following prompt to rectify this issue: "change the pre-process-backend parameter of the light blue block to opencv". This is provided as a User Text Modification 415 in the system. Note that here the user is referring to the exact code block using the annotated color of that code block depicted in the Annotated Code View 230. The Feedback Agent 450 translates annotated references to a reference that the Code Generator System 420 would understand, using the annotation mapping from Annotation Agent 440.

The Feedback Agent 450 sends the new user request along with the annotated reference translation to the LLM Code Generator and obtains the revised code from it. The code is then again fed into the Code Correction Agent to be validated. If the code is successful, then it is taken forward to generate the Running Pipeline View 240, Annotated Code View 230, and Annotated Graph View 210. If not, the self-correction process is kicked off by the Code Correction Agent 430.

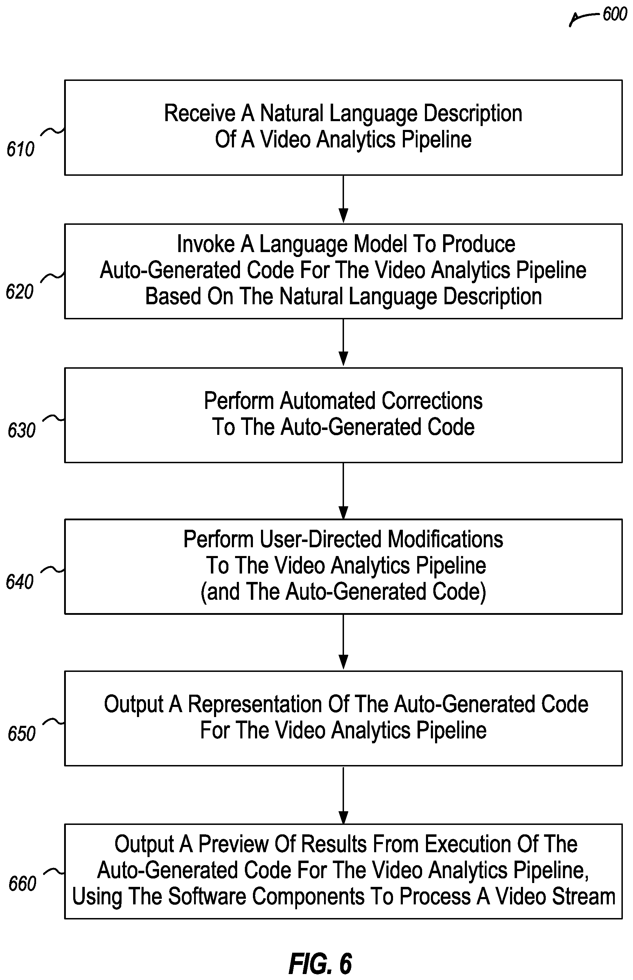

FIG. 6 depicts a flowchart of an example method of generating code for a video analytics pipeline, consistent with the examples provided above with reference to FIGS. 1 to 5.

At 610, operations are performed to obtain, extract, and/or receive a natural language description of a video analytics pipeline. This natural language description may be provided by a development user as discussed above in connection with block 110, block 150, or the Chatbot Interface 250.

At 620, operations are performed to invoke a language model to produce auto-generated code for the video analytics pipeline based on the natural language description. In a specific example, the language model is a generative text model, and the natural language description is provided from a natural language conversation performed between the generative text model and a human user. Also in a specific example, the auto-generated code is configured to invoke multiple nodes of a software development kit for the video analytics pipeline, based on respective properties corresponding to the multiple nodes.

This video analytics pipeline may be provided by auto-generated code that is configured to sequentially process an input video stream with respective software components. In a specific example, the video analytics pipeline invokes the software components to respectively: decode image data, pre-process image data, and detect objects in the image data. Other types of processing actions may be provided in the pipeline.

At 630, operations are performed to implement automated corrections to the auto-generated code. Such automated corrections may iteratively run to enable the auto-generated code to successfully execute and invoke each of the software components.

At 640, operations are performed to implement user-directed inputs and modifications to the video analytics pipeline and the auto-generated code. In an example, user inputs are received (e.g., on the annotated code or graph view, in a node properties pane, or via the chatbot interface) to modify or re-configure use of at least one of the software components in the video analytics pipeline.

At 650, operations are performed to output a representation of the auto-generated code for the video analytics pipeline, as the video analytics pipeline invokes specific software components to process a video or camera data stream. In an example, the representation of the auto-generated code includes: an annotated code view (e.g., code view 230) of the auto-generated code; and an annotated graph view (e.g., graph view 210) of processing actions corresponding to respective portions of the auto-generated code. As depicted with reference to FIGS. 2 and 5, the annotated code view can provide annotations to the auto-generated code using multiple colors, shading, or visible indicators, and the annotated graph view can provide corresponding annotations to the processing actions using the multiple colors, shading, or visible indicators. In a specific example, the processing actions are arranged in the graph based on a sequence of use of the processing actions by the software components. Also in a specific example, as discussed above, the annotated code view and the annotated graph view are configured to receive user interaction, to modify the auto-generated code in response to the user interaction.

At 660, operations are performed to output a preview of results from execution of the auto-generated code for the video analytics pipeline, using the software components to process a video stream. In a further example, modifications or changes provided at 640 may be previewed, such as by visually representing the use of the at least one of the software components and any modifications from the user inputs.

Embodiments to implement the approaches above may be implemented in one or a combination of hardware, firmware, and software. Embodiments may also be implemented as instructions stored on a machine-readable storage device, which may be read and executed by at least one processor to perform the operations described herein. A machine-readable storage device may include any non-transitory mechanism for storing information in a form readable by a machine (e.g., a computer). For example, a machine-readable storage device may include read-only memory (ROM), random-access memory (RAM), magnetic disk storage media, optical storage media, flash-memory devices, and other storage devices and media.

A processor subsystem may be used to execute the instruction on the machine-readable medium. The processor subsystem may include one or more processors, each with one or more cores. Additionally, the processor subsystem may be disposed on one or more physical devices. The processor subsystem may include one or more specialized processors, such as a graphics processing unit (GPU), a digital signal processor (DSP), a field programmable gate array (FPGA), or a fixed function processor.

Examples, as described herein, may include, or may operate on, logic or a number of components, modules, or mechanisms. Such components may be hardware, software, or firmware communicatively coupled to one or more processors in order to carry out the operations described herein. Components may be hardware components, and as such components may be considered tangible entities capable of performing specified operations and may be configured or arranged in a certain manner. In an example, circuits may be arranged (e.g., internally or with respect to external entities such as other circuits) in a specified manner as a component. In an example, the whole or part of one or more computer systems (e.g., a standalone, client or server computer system) or one or more hardware processors may be configured by firmware or software (e.g., instructions, an application portion, or an application) as a component that operates to perform specified operations. In an example, the software may reside on a machine-readable medium. In an example, the software, when executed by the underlying hardware of the component, causes the hardware to perform the specified operations. Accordingly, a hardware component is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which components are temporarily configured, each of the components need not be instantiated at any one moment in time. For example, where the components comprise a general-purpose hardware processor configured using software; the general-purpose hardware processor may be configured as respective different components at different times. Software may accordingly configure a hardware processor, for example, to constitute a particular component at one instance of time and to constitute a different component at a different instance of time. Components may also be software or firmware implementations, which operate to perform the methodologies described herein.

Circuitry or circuits, as used in this document, may comprise, for example, singly or in any combination, hardwired circuitry, programmable circuitry such as computer processors comprising one or more individual instruction processing cores, state machine circuitry, and/or firmware that stores instructions executed by programmable circuitry. The circuits, circuitry, or components may, collectively or individually, be embodied as circuitry that forms part of a larger system, for example, an integrated circuit (IC), system on-chip (SoC), desktop computers, laptop computers, tablet computers, servers, smart phones, etc.

As used in the present disclosure, the term "logic" may refer to firmware and/or circuitry configured to perform any of the aforementioned operations. Firmware may be embodied as code, instructions or instruction sets and/or data that are hard-coded (e.g., nonvolatile) in memory devices and/or circuitry.

"Circuitry," as used in the present disclosure, may comprise, for example, singly or in any combination, hardwired circuitry, programmable circuitry, state machine circuitry, logic and/or firmware that stores instructions executed by programmable circuitry. The circuitry may be embodied as an integrated circuit, such as an integrated circuit chip. In some embodiments, the circuitry may be formed, at least in part, by the processor circuitry executing code and/or instructions sets (e.g., software, firmware, etc.) corresponding to the functionality described herein, thus transforming a general-purpose processor into a specific-purpose processing environment to perform one or more of the operations described herein. In some embodiments, the processor circuitry may be embodied as a stand-alone integrated circuit or may be incorporated as one of several components on an integrated circuit. In some embodiments, the various components and circuitry of the node or other systems may be combined in a system-on-a-chip (SoC) architecture.

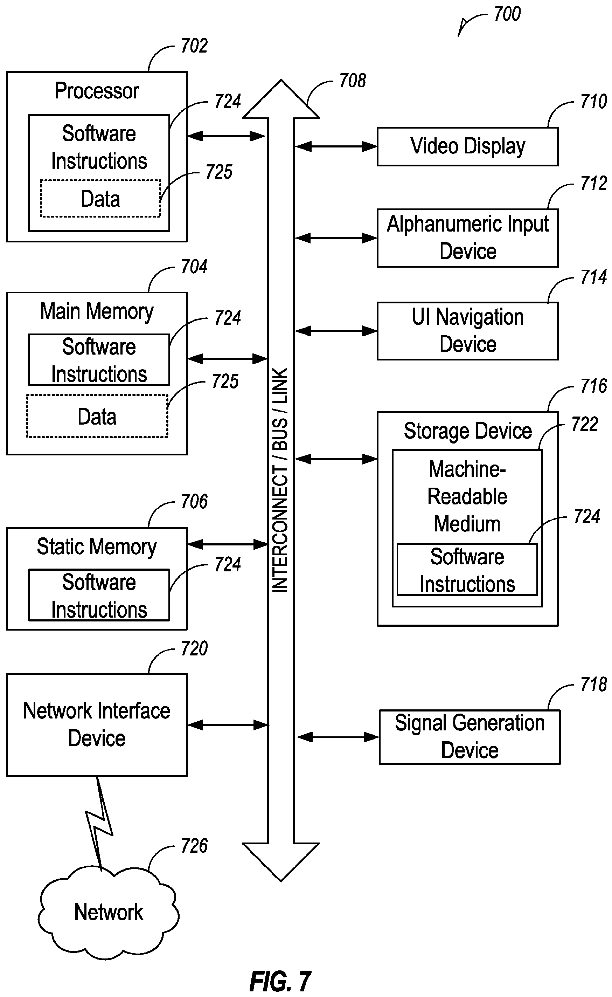

FIG. 7 is a block diagram illustrating a machine in the example form of a computer system 700, within which a set or sequence of instructions may be executed to cause the machine to perform any one of the methodologies discussed herein. In alternative embodiments, the machine operates as a standalone device or may be connected (e.g., networked) to other machines. In a networked deployment, the machine may operate in the capacity of either a server or a client machine in server-client network environments, or it may act as a peer machine in peer-to-peer (or distributed) network environments. The machine may be a vehicle subsystem, a personal computer (PC), a tablet PC, a hybrid tablet, a smartphone or other mobile telephone, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Similarly, the term "processor-based system" shall be taken to include any set of one or more machines that are controlled by or operated by a processor (e.g., a computer) to individually or jointly execute instructions to perform any one or more of the methodologies discussed herein.

Example computer system 700 includes at least one processor 702 (e.g., a central processing unit (CPU), a graphics processing unit (GPU) or both, processor cores, compute nodes, etc.), a main memory 704 and a static memory 706, which communicate with each other via a link 708 (e.g., interconnect or bus). The computer system 700 may further include a video display unit 710, an alphanumeric input device 712 (e.g., a keyboard), and a user interface (UI) navigation device 714 (e.g., a mouse). In one aspect, the video display unit 710, input device 712 and UI navigation device 714 are incorporated into a touch screen display. The computer system 700 may additionally include a storage device 716 (e.g., a drive unit), a signal generation device 718 (e.g., a speaker), a network interface device 720, and one or more sensors (not shown), such as a global positioning system (GPS) sensor, compass, accelerometer, gyrometer, magnetometer, or other sensor.

The storage device 716 includes a machine-readable medium 722 on which is stored one or more sets of data structures and instructions 724 (e.g., software) embodying or utilized by any one or more of the methodologies or functions described herein. The instructions 724 may also reside, completely or at least partially, within the main memory 704, static memory 706, and/or within the processor 702 during execution thereof by the computer system 700, with the main memory 704, static memory 506, and the processor 502 also constituting machine-readable media. As an example, the software instructions 524 may include instructions to implement and execute the coding and refinement operations via the processor (e.g., with software as configured and operated in the examples of FIG. 1 to FIG. 6). As a further example, the main memory 704 (or the other memory such as the static memory 706 or the storage device 716) may host various data 725 provided via the coding and refinement operations discussed herein.

While the machine-readable medium 722 is illustrated in an example aspect to be a single medium, the term "machine-readable medium" may include a single medium or multiple media (e.g., a centralized or distributed database, and/or associated caches and servers) that store the one or more instructions 724. The term "machine-readable medium" shall also be taken to include any tangible medium that is capable of storing, encoding or carrying instructions for execution by the machine and that cause the machine to perform any one or more of the methodologies of the present disclosure or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magnetooptical disks; and CD-ROM and DVD-ROM disks.

The instructions 724 may further be transmitted or received over a communications network 726 using a transmission medium via the network interface device 720 utilizing any one of a number of well-known transfer protocols (e.g., HTTP). Examples of communication networks include a local area network (LAN), a wide area network (WAN), the Internet, mobile telephone networks, plain old telephone (POTS) networks, and wireless data networks (e.g., Bluetooth, Wi-Fi, 3G, and 4G LTE/LTE-A, 5G, 6G, DSRC, or satellite communication networks). The term "transmission medium" shall be taken to include any intangible medium that is capable of storing, encoding, or carrying instructions for execution by the machine, and includes digital or analog communications signals or other intangible medium to facilitate communication of such software.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

Additional examples of the presently described embodiments include the following, non-limiting implementations. Each of the following non-limiting examples may stand on its own or may be combined in any permutation or combination with any one or more of the other examples provided below or throughout the present disclosure.

Example 1 is at least one non-transitory machine-readable medium capable of storing instructions, wherein the instructions when executed by at least one processor, cause the at least one processor to: receive a natural language description of a video analytics pipeline; invoke a language model to produce auto-generated code for the video analytics pipeline based on the natural language description, wherein the auto-generated code is configured to sequentially process an input video stream with respective software components; output a representation of the auto-generated code for the video analytics pipeline; and output a preview of results from execution of the auto-generated code for the video analytics pipeline, using the software components to process a video stream.

In Example 2, the subject matter of Example 1 optionally includes subject matter where the representation of the auto-generated code includes: an annotated code view of the auto-generated code; and an annotated graph view of processing actions corresponding to respective portions of the auto-generated code.

In Example 3, the subject matter of Example 2 optionally includes subject matter where the annotated code view provides annotations to the auto-generated code using multiple colors, and wherein the annotated graph view provides corresponding annotations to the processing actions using the multiple colors.

In Example 4, the subject matter of any one or more of Examples 2-3 optionally include subject matter where the processing actions are arranged in the graph based on a sequence of use of the processing actions by the software components.

In Example 5, the subject matter of any one or more of Examples 2-4 optionally include subject matter where the annotated code view and the annotated graph view are configured to receive user interaction, and wherein the instructions further cause the at least one processor to modify the auto-generated code in response to the user interaction.

In Example 6, the subject matter of any one or more of Examples 1-5 optionally include subject matter where the instructions further cause the at least one processor to: receive user inputs to configure use of at least one of the software components in the video analytics pipeline; wherein the preview of results includes visually representing the use of the at least one of the software components.

In Example 7, the subject matter of any one or more of Examples 1-6 optionally include subject matter where the video analytics pipeline invokes the software components to respectively: decode image data, pre-process image data, and detect objects in the image data.

In Example 8, the subject matter of any one or more of Examples 1-7 optionally include subject matter where the instructions are further configured to cause the at least one processor to: perform automated corrections to the auto-generated code, to enable the auto-generated code to successfully execute and invoke each of the software components.

In Example 9, the subject matter of any one or more of Examples 1-8 optionally include subject matter where the language model is a generative text model, and wherein the natural language description is provided from a natural language conversation performed between the generative text model and a human user.

In Example 10, the subject matter of any one or more of Examples 1-9 optionally include subject matter where the auto-generated code is configured to invoke multiple nodes of a software development kit for the video analytics pipeline, based on respective properties corresponding to the multiple nodes.

Example 11 is a computing system, comprising: processing circuitry; and a memory device including instructions embodied thereon, wherein the instructions, which when executed by the processing circuitry, configure the processing circuitry to perform operations that: obtain a natural language description of a video analytics pipeline; invoke a language model to produce auto-generated code for the video analytics pipeline based on the natural language description, wherein the auto-generated code is configured to sequentially process an input video stream with respective software components; output a representation of the auto-generated code for the video analytics pipeline; and output a preview of results from execution of the auto-generated code for the video analytics pipeline, using the software components to process a video stream.

In Example 12, the subject matter of Example 11 optionally includes subject matter where the representation of the auto-generated code includes: an annotated code view of the auto-generated code; and an annotated graph view of processing actions corresponding to respective portions of the auto-generated code.

In Example 13, the subject matter of Example 12 optionally includes subject matter where the annotated code view provides annotations to the auto-generated code using multiple colors, and wherein the annotated graph view provides corresponding annotations to the processing actions using the multiple colors.

In Example 14, the subject matter of any one or more of Examples 12-13 optionally include subject matter where the processing actions are arranged in the graph based on a sequence of use of the processing actions by the software components.

In Example 15, the subject matter of any one or more of Examples 12-14 optionally include subject matter where the annotated code view and the annotated graph view are configured to receive user interaction, and wherein the instructions further cause the processing circuitry to modify the auto-generated code in response to the user interaction.

In Example 16, the subject matter of any one or more of Examples 11-15 optionally include subject matter where the instructions further cause the processing circuitry to: receive user inputs to configure use of at least one of the software components in the video analytics pipeline; wherein the preview of results includes visually representing the use of the at least one of the software components.

In Example 17, the subject matter of any one or more of Examples 11-16 optionally include subject matter where the video analytics pipeline invokes the software components to respectively: decode image data, pre-process image data, and detect objects in the image data.

In Example 18, the subject matter of any one or more of Examples 11-17 optionally include subject matter where the instructions are further configured to cause the processing circuitry to: perform automated corrections to the auto-generated code, to enable the auto-generated code to successfully execute and invoke each of the software components.

In Example 19, the subject matter of any one or more of Examples 11-18 optionally include subject matter where the language model is a generative text model, and wherein the natural language description is provided from a natural language conversation performed between the generative text model and a human user.

In Example 20, the subject matter of any one or more of Examples 11-19 optionally include subject matter where the auto-generated code is configured to invoke multiple nodes of a software development kit for the video analytics pipeline, based on respective properties corresponding to the multiple nodes.

Example 21 is a method for establishing an executable video analytics pipeline, comprising: receiving a natural language description of a video analytics pipeline; invoking a language model to produce auto-generated code for the video analytics pipeline based on the natural language description, wherein the auto-generated code is configured to sequentially process an input video stream with respective software components; outputting a representation of the auto-generated code for the video analytics pipeline; and outputting a preview of results from execution of the auto-generated code for the video analytics pipeline, using the software components to process a video stream.

In Example 22, the subject matter of Example 21 optionally includes subject matter where the representation of the auto-generated code includes: an annotated code view of the auto-generated code; and an annotated graph view of processing actions corresponding to respective portions of the auto-generated code.

In Example 23, the subject matter of Example 22 optionally includes subject matter where the annotated code view provides annotations to the auto-generated code using multiple colors, and wherein the annotated graph view provides corresponding annotations to the processing actions using the multiple colors.

In Example 24, the subject matter of any one or more of Examples 22-23 optionally include subject matter where the processing actions are arranged in the graph based on a sequence of use of the processing actions by the software components.

In Example 25, the subject matter of any one or more of Examples 22-24 optionally include subject matter where the annotated code view and the annotated graph view are configured to receive user interaction, and wherein the method further comprises modifying the auto-generated code in response to the user interaction.

In Example 26, the subject matter of any one or more of Examples 21-25 optionally include receive user inputs to configure use of at least one of the software components in the video analytics pipeline; wherein the preview of results includes visually representing the use of the at least one of the software components.

In Example 27, the subject matter of any one or more of Examples 21-26 optionally include subject matter where the video analytics pipeline invokes the software components to respectively: decode image data, pre-process image data, and detect objects in the image data.

In Example 28, the subject matter of any one or more of Examples 21-27 optionally include performing automated corrections to the auto-generated code, to enable the auto-generated code to successfully execute and invoke each of the software components.

In Example 29, the subject matter of any one or more of Examples 21-28 optionally include subject matter where the language model is a generative text model, and wherein the natural language description is provided from a natural language conversation performed between the generative text model and a human user.

In Example 30, the subject matter of any one or more of Examples 21-29 optionally include subject matter where the auto-generated code is configured to invoke multiple nodes of a software development kit for the video analytics pipeline, based on respective properties corresponding to the multiple nodes.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate aspect. The scope of the embodiments disclosed herein is to be determined with reference to the appended claims, along with the full scope of equivalents to which such claims are entitled.

## Claims

1. A method, comprising:
receiving a natural language description of a video analytics pipeline;
invoking a language model to produce auto-generated code for the video analytics pipeline based on the natural language description, wherein the auto-generated code is configured to sequentially process an input video stream with respective software components;
outputting a representation of the auto-generated code for the video analytics pipeline; and
outputting a preview of results from execution of the auto-generated code for the video analytics pipeline, using the software components to process a video stream.

2. The method of claim 1, wherein the representation of the auto-generated code includes:
an annotated code view of the auto-generated code; and
an annotated graph view of processing actions corresponding to respective portions of the auto-generated code.

3. The method of claim 2, wherein the annotated code view provides annotations to the auto-generated code using multiple colors, and wherein the annotated graph view provides corresponding annotations to the processing actions using the multiple colors.

4. The method of claim 2, wherein the processing actions are arranged in the graph based on a sequence of use of the processing actions by the software components.

5. The method of claim 2, wherein the annotated code view and the annotated graph view are configured to receive user interaction, and wherein the method further comprises modifying the auto-generated code in response to the user interaction.

6. The method of any of claims 1 to 5, further comprising:
receiving user inputs to configure use of at least one of the software components in the video analytics pipeline;
wherein the preview of results includes visually representing the use of the at least one of the software components.

7. The method of any of claims 1 to 6, wherein the video analytics pipeline invokes the software components to respectively:
decode image data;
pre-process image data; and
detect objects in the image data.

8. The method of any of claims 1 to 7, further comprising:
performing automated corrections to the auto-generated code, to enable the auto-generated code to successfully execute and invoke each of the software components.

9. The method of any of claims 1 to 8, wherein the language model is a generative text model, and wherein the natural language description is provided from a natural language conversation performed between the generative text model and a human user.

10. The method of any of claims 1 to 9, wherein the auto-generated code is configured to invoke multiple nodes of a software development kit for the video analytics pipeline, based on respective properties corresponding to the multiple nodes.

11. At least one non-transitory machine-readable medium capable of storing instructions, wherein the instructions when executed by at least one processor, cause the at least one processor to perform the methods of any of claims 1 to 10.

12. A computing system, comprising:
processing circuitry; and
a memory device including instructions embodied thereon, wherein the instructions, which when executed by the processing circuitry, configure the processing circuitry to perform the methods of any of claims 1 to 10.
